# EUROPEAN PATENT APPLICATION

(11) **EP 4 783 645 A1**
(43) Date of publication of application: **29.07.2026**
(21) Application number: 24867782.5
(22) Date of filing: 28.02.2024
(51) Int. Cl.: H04W 24/02, G06N 20/00, H04W 24/08

(54) **CONTROL DEVICE FOR RADIO ACCESS NETWORK AND COMPUTER-READABLE STORAGE MEDIUM**

(30) Priority: 19.09.2023 JP 2023150824
(71) Applicant: KDDI Corporation, Tokyo 163-8003 (JP)
(72) Inventor: TSUKAMOTO, Yuu, Fujimino-shi Saitama 356-8502 (JP); IKAMI, Akio, Fujimino-shi Saitama 356-8502 (JP); HIRAYAMA, Haruhisa, Tokyo 163-8003 (JP)
(74) Representative: Mathys & Squire
(86) International application number: PCT/JP2024/007229
(87) International publication number: WO 2025/062690

(57) **Abstract**

A control apparatus for a radio access network (RAN), includes: collection means configured to control the RAN based on a learning model and to collect first learning data from the RAN; determination means configured to determine usefulness of the first learning data in machine learning for the learning model; and processing means configured to perform processing to select second learning data from the first learning data for transmission to another control apparatus that performs the machine learning, based on the usefulness of the first learning data.

## Description

### TECHNICAL FIELD

The present disclosure relates to a control technique for a radio access network (RAN).

### BACKGROUND ART

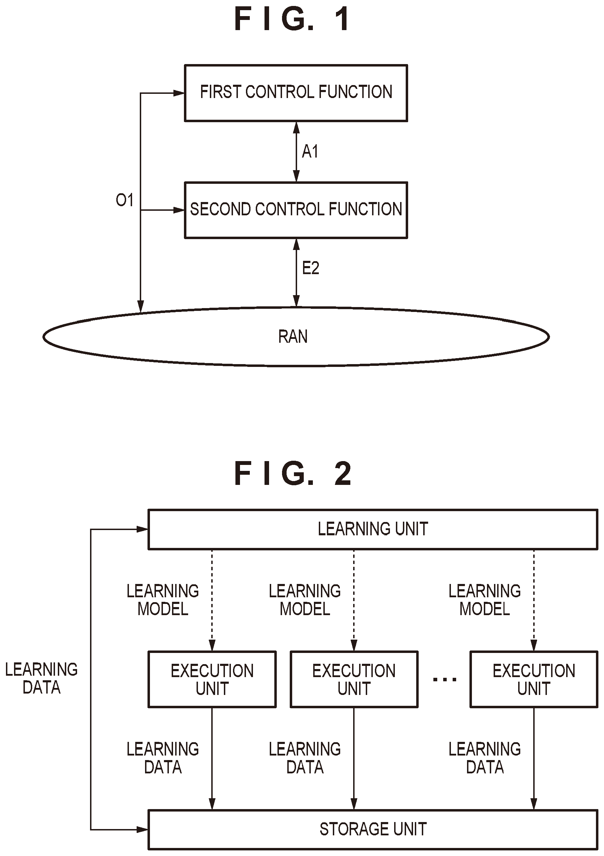

FIG. 1 illustrates a control configuration for a RAN as proposed by Open Radio Access Network (O-RAN) Alliance. As shown in FIG. 1, a first control function for long-cycle control and a second control function for short-cycle control are defined. In O-RAN, the first control function is referred to as a Non-Real-Time RAN Intelligent Controller (Non-RT RIC), and the second control function is referred to as a Near-Real-Time RAN Intelligent Controller (Near-RT RIC).

The first control function and second control function are connected via an A1 interface. The second control function controls RAN components, such as Centralized Units (CUs) and Distributed Units (DUs) via an E2 interface. Here, "controlling CUs and DUs" includes notifying and setting various parameter values used by the CUs and DUs in their processing, as well as instructing the CUs and DUs to execute certain operations, and the like. Further, in the following description, the term "RAN" is used as a collective term for its components. Thus, for example, "controlling an RAN" means controlling CUs and DUs, which are components of the RAN. The first control function, second control function, and RAN are further connected via an O1 interface. The O1 interface may be used to transmit traffic data, performance data, failure data, and the like measured, detected and stored by the RAN.

NPL 1 discloses a configuration that utilizes machine learning for RAN control. Specifically, NPL 1 discloses generating a learning model through machine learning based on various learning data collected from the RAN and the like, performing inference using the learning model, and controlling the RAN according to the inference results. In one configuration among a plurality of configurations disclosed in NPL 1, the first control function generates the learning model. Then, the second control function uses the learning model generated by the first control function to control the RAN.

NPL 2 discloses distributed reinforcement learning that achieves high learning efficiency. As shown in FIG. 2, in distributed reinforcement learning, a learning unit performs machine learning based on learning data stored in a storage unit to generate a learning model. The learning unit distributes the learning model to a plurality of execution units deployed in a distributed manner. Each execution unit is associated with a "control target." The execution unit determines control content for the control target using the learning model based on a "current state" of the control target, and executes control of the control target based on the determined "control content". The execution unit evaluates "degree of achievement" of a control objective by determining a "next state" of the control target resulting from the control. In distributed reinforcement learning, the terms "control target," "current state," "next state," "control content," and "degree of achievement" are referred to as "Environment," "State," "Next State," "Action," and "Reward", respectively.

Then, the execution unit calculates an evaluation value called temporal-difference error based on the degree of achievement, current state, and next state. In the following description, temporal-difference error is denoted as TD error, and its value as TD error value. The TD error value is defined as the sum of the "degree of achievement" obtained as a result of the control and a value determined based on the "next state", minus a value determined based on the "current state" before the control. A large TD error value indicates that the degree of achievement of the control objective in the "next state" is low, meaning that the output accuracy of the learning model based on the "current state" is low or the output error of the learning model based on the "current state" is large.

The execution unit stores the "current state", "next state", "control content", and "degree of achievement" as learning data in the storage unit for the next learning by the learning unit. At this time, the execution unit assigns the TD error value calculated for the learning data to the learning data. As described above, a large TD error value for the learning data indicates that the output accuracy of the learning model based on the input data (current state) contained in the learning data is low. Therefore, using learning data with large TD error values for machine learning significantly updates the learning model and improves learning effectiveness. Accordingly, the learning unit prioritizes using the learning data stored in the storage unit that is assigned a larger TD error value for machine learning. This makes it possible to improve the learning efficiency of the learning unit.

### CITATION LIST

### NON PATENT LITERATURE

NPL 1: O-RAN Alliance, "AI/ML workflow description and requirements," O-RAN. WG2. AIML-v01. 03, July 2021
NPL 2: D. Horgan, et al., "Distributed prioritized experience replay, arXiv: 1803.00933., April 2018

### SUMMARY OF INVENTION

### TECHNICAL PROBLEM

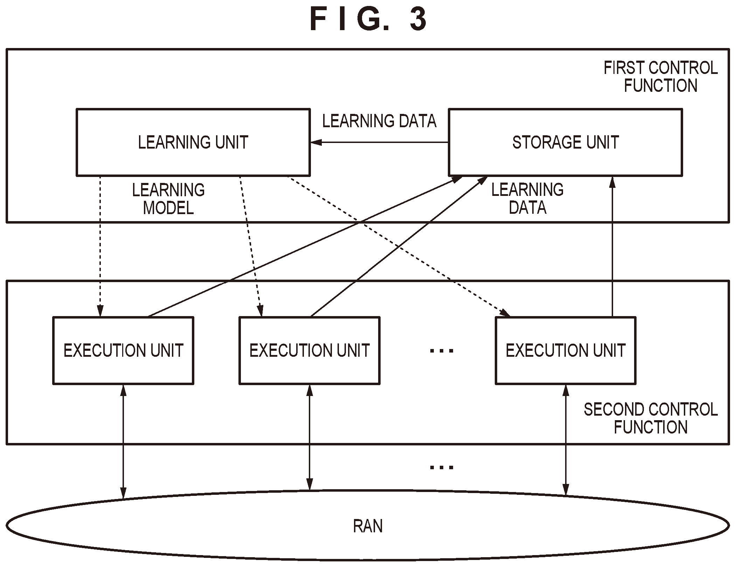

FIG. 3 illustrates a configuration when distributed reinforcement learning is applied to O-RAN. The execution units that control the RAN based on the learning model are placed in the second control function, while the learning unit that generates the learning model and the storage unit that stores learning data collected by the execution units are placed in the first control function. However, in the configuration of FIG. 3, the amount of learning data from each execution unit in the second control function becomes excessively large. For example, assume that the area covered by the first control function includes 2.5 million user equipment (UE), the size of learning data obtained from the RAN is 356 bytes per UE, and each execution unit in the second control function transmits learning data to the first control function at a cycle of 20 times per second. In this case, the first control function would receive 142.4 Gbits of data per second, which is impractical. For example, by increasing the interval at which each execution unit of the second control function transmits learning data, the amount of learning data received by the first control function can be reduced; however, this may degrade learning efficiency.

### SOLUTION TO PROBLEM

According to an aspect of the present invention, a control apparatus for a radio access network (RAN), includes: collection means configured to control the RAN based on a learning model and to collect first learning data from the RAN; determination means configured to determine usefulness of the first learning data in machine learning for the learning model; and processing means configured to perform processing to select second learning data from the first learning data for transmission to another control apparatus that performs the machine learning, based on the usefulness of the first learning data.

### ADVANTAGEOUS EFFECTS OF INVENTION

According to the present disclosure, it is possible to prevent degradation of learning efficiency while suppressing excessive increase in the amount of learning data transmitted between the apparatus that collects learning data and the apparatus that performs machine learning.

Other features and advantages of the present invention will become apparent from the following description with reference to the accompanying drawings. In the accompanying drawings, the same or similar components are denoted by the same reference numerals.

### BRIEF DESCRIPTION OF DRAWINGS

FIG. 1 is a control configuration diagram of a RAN according to the background art.
FIG. 2 is a configuration diagram of distributed reinforcement learning according to the background art.
FIG. 3 is a configuration diagram when distributed reinforcement learning is applied to RAN control.
FIG. 4 is a control configuration diagram of a RAN according to an embodiment.
FIG. 5 is a configuration diagram of the second control apparatus according to an embodiment.
FIG. 6 is a configuration diagram of the first control apparatus according to an embodiment.
FIG. 7 is a sequence diagram according to an embodiment.

### DESCRIPTION OF EMBODIMENTS

The embodiments are described in detail below with reference to the accompanying drawings. The following embodiments do not limit the invention of the claims, and not all of the combinations of features described in the embodiments are essential to the invention. Two or more of the features described in the embodiments may be arbitrarily combined. The same reference number is used for the same or similar element, and duplicated explanations are omitted.

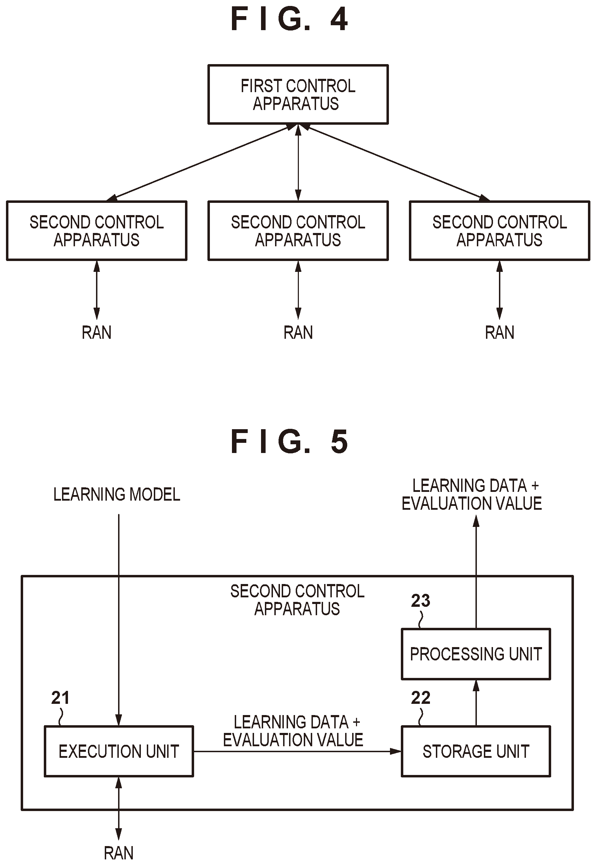

FIG. 4 shows a control configuration of a RAN according to the present embodiment. The configuration shown in FIG. 4 is basically the same as that shown in FIG. 1. The first control apparatus performs long-cycle control of the RAN and is, for example, an apparatus that implements the functionality of the Non-RT RIC in O-RAN. The second control apparatus controls the RAN at a shorter cycle than the first control apparatus and is, for example, an apparatus that implements the functionality of the Near-RT RIC in O-RAN. The first control apparatus is connected to one or more second control apparatuses. In the example shown in FIG. 4, the first control apparatus is connected to three second control apparatuses. The first control apparatus performs machine learning to generate a learning model and distributes the learning model to each second control apparatus. Each second control apparatus is associated with a geographic area and uses the learning model obtained from the first control apparatus to control RAN components deployed in the associated geographic area. Note that the second control apparatus controls the portion of the RAN of the mobile communication network that corresponds to its associated geographic area; however, the portion of the RAN of the mobile communication network that corresponds to the geographic area associated with the second control apparatus is also referred to as RAN.

FIG. 5 is a configuration diagram of the second control apparatus. An execution unit 21 obtains the learning model from the first control apparatus and performs inference based on the learning model to control the RAN. The control objective may be, for example, to maximize overall throughput or to maximize the average quality of the radio section. In this case, for example, the second control apparatus may perform beamforming control to achieve the control objective. Alternatively, the control objective may be to minimize computing resources used to implement CUs and DUs through virtualization techniques. In this case, for example, the second control apparatus may control the placement of CUs and DUs within the RAN.

For example, the execution unit 21 uses the "current state" of the RAN collected from the RAN as input to the learning model, obtains the output of the learning model, and, based on this output, determines the "control content" for the RAN and performs control of the RAN. The execution unit 21 collects the "next state" of the control target from the RAN as a result of the control and evaluates the "degree of achievement" of the control objective. Then, the execution unit 21 generates learning data based on the "current state," "next state," "control content," and "degree of achievement," determines an evaluation value for the learning data, and assigns the evaluation value to the learning data. The execution unit 21 stores the learning data with the assigned evaluation value in the storage unit 22. Thus, the execution unit 21 has a control function of the RAN based on the learning model, a collecting function of the learning data, and a determination function of the evaluation value of the learning data. The evaluation value of the learning model indicates the usefulness of the learning model for machine learning of the learning model. Note that higher usefulness means that the learning data provides a greater learning effect in machine learning. As one example, the TD error value described above can be used as the evaluation value. That is, as the evaluation value of the learning data, it is possible to use a value that becomes larger as the input data included in the learning data makes the output error of the learning model larger. In other words, for learning data based on data that leads to a lower achievement of the control objective for the RAN, a larger value can be used as the evaluation value.

When the TD error value is used as the evaluation value, the larger the evaluation value assigned to the learning data, the higher the usefulness of the learning data. However, the evaluation value is not limited to the TD error value and may be any value that varies according to the inference error of the learning model, that is, the output error of the learning model. In this case, the learning data based on input data that causes a larger inference error (output error of the learning model) will have higher usefulness for machine learning. In other words, the learning data based on input data that reduces the accuracy of inference (output of the learning model) will have higher usefulness for machine learning. Note that the evaluation value of the learning data may also indicate that the smaller the value, the higher the usefulness for machine learning.

The processing unit 23 reads the learning data with assigned evaluation values stored in the storage unit 22 and transmits it to the first control apparatus. In the following description, "learning data with the assigned evaluation value" is simply referred to as "learning data." For example, when the first control apparatus implements the Non-RT RIC and the second control apparatus implements the Near-RT RIC, the processing unit 23 can transmit the learning data to the first control apparatus via the A1 interface or the O1 interface. In the present embodiment, the processing unit 23 (second control apparatus) is configured to operate in at least one of the three operation modes described below.

First Operation Mode: In the first operation mode, an upper limit value of the transmission rate is set for the processing unit 23, and the processing unit 23 reads learning data from the storage unit 22 and transmits it to the first control apparatus so that the transmission rate to the first control apparatus does not exceed the set upper limit value. That is, the processing unit 23 may transmit learning data at a transmission rate below the upper limit value while the amount of learning data stored in the storage unit 22 is small, but controls the reading from the storage unit 22 so that the transmission rate does not exceed the upper limit value regardless of how much the amount of learning data stored in the storage unit 22 increases. Note that, when transmitting the learning data to the first control apparatus, the processing unit 23 reads out the learning data from the storage unit 22 in descending order of usefulness as indicated by the evaluation value. For example, when using the TD error value as the evaluation value, the processing unit 23 reads out the learning data from the storage unit 22 in descending order of the evaluation value.

By setting an upper limit on the transmission rate to the first control apparatus, it is possible to suppress excessive increase in the amount of learning data transmitted to the first control apparatus that performs machine learning. In addition, since learning data with evaluation values indicating high usefulness for machine learning is preferentially transmitted to the first control apparatus, it is possible to prevent a decrease in learning efficiency at the first control apparatus.

Second Operation Mode: In the second operation mode, a threshold value for the evaluation value is set for the processing unit 23, and the processing unit 23 reads only learning data with evaluation values indicating usefulness higher than the set threshold from the storage unit 22 and transmits it to the first control apparatus. For example, when the TD error value is used as the evaluation value, the processing unit 23 reads only learning data with evaluation values greater than the threshold from the storage unit 22.

By transmitting only learning data that meets predetermined conditions to the first control apparatus instead of transmitting all learning data collected by the execution unit 21, it is possible to suppress excessive increase in the amount of learning data transmitted to the first control apparatus that performs machine learning. In addition, since only learning data with evaluation values indicating usefulness higher than the threshold value is transmitted to the first control apparatus, it is possible to prevent a decrease in learning efficiency at the first control apparatus.

Third Operation Mode: In the third operation mode, as in the first operation mode, an upper limit value of the transmission rate is set for the processing unit 23, and the processing unit 23 reads learning data from the storage unit 22 and transmits it to the first control apparatus so that the transmission rate to the first control apparatus does not exceed the set upper limit value. However, in the third operation mode, determination information for determining a probability value (read probability) of reading the learning data based on the evaluation value of the learning data is further set for the processing unit 23. The determination information is set so that the probability value of the learning data becomes higher as the usefulness of the learning data increases. The processing unit 23 determines the probability value of the read probability of the learning data based on the determination information. Then, the processing unit 23 reads the learning data stored in the storage unit 22 according to the probability value of each learning data. Note that the higher the probability value of the learning data, the higher the probability of being read from the storage unit 22.

Accordingly, in the third operation mode, unlike in the first operation mode, it is probabilistically possible that learning data with lower usefulness stored in the storage unit 22 will be read out from the storage unit 22 before learning data with higher usefulness stored in the storage unit 22 and transmitted to the first control apparatus. For example, if machine learning is performed using only highly useful learning data, the performance of the learning model may deteriorate due to so-called overfitting. In the third operation mode, since learning data with lower usefulness is also probabilistically transmitted to the first control apparatus, deterioration of the learning model performance due to overfitting can be suppressed.

Note that the determination information may be information indicating a formula or a coefficient of a formula for converting the evaluation value into a probability value. Furthermore, the determination information may be information indicating a lookup table (LUT) that represents the relationship between the evaluation value and the probability value.

It should be noted that, in any operation mode, it is possible that learning data with low usefulness will not be read out from the storage unit 22. To prevent "old" learning data that has been stored for a long time after collection from being used for machine learning, the storage unit 22 may be configured to discard learning data that has been stored in the storage unit 22 for longer than a predetermined period.

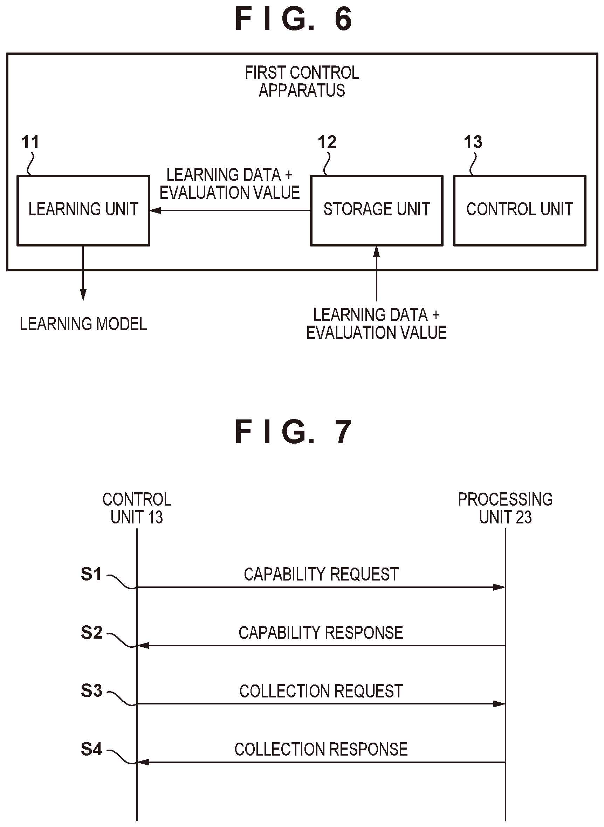

FIG. 6 is a configuration diagram of the first control apparatus. The storage unit 12 stores learning data received from the second control apparatus. The learning unit 11 performs machine learning based on the learning data stored in the storage unit 12 to generate a learning model. In this process, the learning unit 11 may preferentially use learning data that has been assigned higher evaluation values indicating greater usefulness for machine learning. The learning unit 11 transmits the generated learning model to each second control apparatus. Thus, the learning unit 11 has a generation function for generating a learning model through machine learning and a transmission function for transmitting the generated learning model. The generation of the learning data by the learning unit 11 and its subsequent transmission to each second control apparatus may be executed periodically or when predetermined criteria are satisfied. For example, the predetermined criteria may be satisfied when the amount of learning data stored in the storage unit 12 reaches a predetermined amount.

The control unit 13 controls the operation mode of each second control apparatus (processing unit 23). FIG. 7 is a sequence diagram of the process for controlling the operation mode of the processing unit 23. In S1, the control unit 13 transmits a capability request message to the processing unit 23. In response to the capability request message, the processing unit 23 transmits a capability response message to the control unit 13 in S2. The capability response message includes information indicating the operation modes that can be supported (available) by the processing unit 23. The control unit 13 selects the operation mode to be actually used from among the operation modes that can be supported by the processing unit 23.

In S3, the control unit 13 transmits a collection request message to the processing unit 23, the message including information indicating the operation mode to be actually used. The collection request message includes operation information corresponding to the operation mode to be used. For example, when the first operation mode is used, the operation information includes information indicating an upper limit value of the transmission rate when transmitting learning data. When the second operation mode is used, the operation information includes information indicating a threshold value. Furthermore, when the third operation mode is used, the operation information includes information indicating an upper limit value of the transmission rate when transmitting learning data and determination information. In S4, the processing unit 23 transmits a collection response message to the control unit 13 in response to the collection request message. Thereafter, the processing unit 23 performs processing to transmit learning data to the first control apparatus until notified by the first control apparatus to stop collection.

Furthermore, the control unit 13 can change the operation mode of the processing unit 23 by the collection request message in S3. Furthermore, the control unit 13 can also change the operation information used in the operation mode being used by the processing unit 23 by the collection request message in S3. For example, when operating in the first operation mode or the third operation mode, the control unit 13 can change the upper limit value of the transmission rate according to the time of day or traffic conditions. This allows the amount of learning data transmitted to the first control apparatus to be reduced during periods of heavy traffic and increased during periods of light traffic. In addition, when operating in the third operation mode, the control unit 13 can change the determination information based on whether deterioration of learning performance due to overfitting has occurred, thereby controlling the probability value derived from the evaluation value. This enables dynamic suppression of deterioration in learning performance due to overfitting.

Furthermore, when operating in the second operation mode, the control unit 13 can dynamically update the threshold value according to the amount of learning data transmitted from each second control apparatus. The evaluation value of each learning data tends to be large on average when the inference performance of the learning model is low and tends to be small on average when the inference performance of the learning model is high. Therefore, if the threshold value is fixed, the amount of learning data transmitted from the second control apparatus to the first control apparatus may become excessively small as the inference performance of the learning model improves. Thus, by dynamically controlling the threshold value, it is possible to prevent the amount of learning data transmitted from each second control apparatus from becoming excessively small.

In the present embodiment, the operation mode and the operation information used in the operation mode were changed by the collection request message in S3, but the configuration may be such that the operation mode and the operation information used in the operation mode are changed using a message different from the collection request message, such as a "change request message." Furthermore, instead of the control unit 13 setting operation information for each second control apparatus, another apparatus different from the first control apparatus and the second control apparatus, or an operator of the mobile communication network, may set operation information for the second control apparatus. In this case, the control unit 13 does not need to notify the processing unit 23 of the operation information in S3. In the third operation mode, it is also possible to adopt a configuration in which one of the upper limit value and the determination information is set by the first control apparatus and the other is set by the operator of the mobile communication network or the like. Further, for example, when all processing units 23 are configured with only one operation mode, the processes of S1 and S2 may be omitted. That is, the control unit 13 does not need to determine the operation mode available in the processing unit 23 and specify the operation mode to be used to the processing unit 23, and the processing unit 23 operates according to the single operation mode with which it is configured.

With the above configuration, the first control apparatus can specify the operation mode of the second control apparatus and control the amount of learning data transmitted from each second control apparatus. Therefore, it is possible to prevent a decrease in learning efficiency and suppress an excessive increase in the amount of learning data transmitted from each second control apparatus to the first control apparatus.

Note that the first control apparatus and the second control apparatus may be implemented as a single apparatus, such as a single computer. Furthermore, the first control apparatus and the second control apparatus may be implemented as multiple apparatuses capable of communicating with each other, such as multiple computers. As one example, the learning unit 11, the storage unit 12, and the control unit 13 of the first control apparatus may each be implemented in a separate apparatus, and the three apparatuses implementing the learning unit 11, the storage unit 12, and the control unit 13 may communicate with each other via a network to collectively constitute one first control apparatus. Alternatively, for example, the learning unit 11 and the control unit 13 may be implemented in one apparatus, and the storage unit 12 may be implemented in another apparatus, and these two apparatuses may communicate with each other via a network to collectively constitute one first control apparatus. The same applies to the second control apparatus.

Further, according to the present disclosure, a program executable by one or more processors is provided. The program includes instructions which, when executed by one or more processors of an apparatus, causes the apparatus to function as the first control apparatus or the second control apparatus. Further, according to the present disclosure, a non-transitory computer readable storage medium storing the above program is provided. Furthermore, according to the present disclosure, a method executed by the first control apparatus or the second control apparatus, a program for causing an apparatus having one or more processors to execute the method, and a non-transitory computer readable storage medium storing the program are provided.

The present invention is not limited to the above embodiments, and various changes and modifications can be made within the spirit and scope of the present invention.

This application claims priority from Japanese Patent Application No. 2023-150824 filed September 19, 2023, which is hereby incorporated by reference herein in its entirety.

## Claims

1. A control apparatus for a radio access network (RAN), comprising:
collection means configured to control the RAN based on a learning model and to collect first learning data from the RAN;
determination means configured to determine usefulness of the first learning data in machine learning for the learning model; and
processing means configured to perform processing to select second learning data from the first learning data for transmission to another control apparatus that performs the machine learning, based on the usefulness of the first learning data.

2. The control apparatus according to claim 1, wherein
an upper limit value of a transmission rate is set for the processing means, and
the processing means is further configured to select the second learning data in descending order of the usefulness of the first learning data so that the transmission rate of the second learning data transmitted to the other control apparatus does not exceed the upper limit value.

3. The control apparatus according to claim 2, wherein
the upper limit value is set by the other control apparatus.

4. The control apparatus according to claim 1, wherein
an upper limit value of a transmission rate and determination information for determining a probability value of a selection probability based on the usefulness are set for the processing means, and
the processing means is further configured to determine the probability value of the first learning data based on the usefulness of the first learning data and to select the second learning data from the first learning data with a selection probability based on the probability value of the first learning data so that the transmission rate of the second learning data transmitted to the other control apparatus does not exceed the upper limit value,
wherein the probability value based on the determination information becomes higher as the usefulness increases.

5. The control apparatus according to claim 4, wherein
at least one of the upper limit value and the determination information is set by the other control apparatus.

6. The control apparatus according to claim 1, wherein
a threshold value of the usefulness is set for the processing means, and
the processing means is further configured to select the first learning data having usefulness higher than the threshold value as the second learning data.

7. The control apparatus according to claim 6, wherein
the threshold value is set by the other control apparatus.

8. The control apparatus according to any one of claims 1 to 7, wherein
the usefulness of the first learning data is determined based on an error of the output of the learning model based on input data to the learning model included in the first learning data.

9. The control apparatus according to claim 8, wherein
the usefulness of the first learning data becomes higher as the error becomes larger.

10. The control apparatus according to any one of claims 1 to 7, wherein
the usefulness of the first learning data becomes higher as a temporal difference error of the first learning data becomes larger.

11. The control apparatus according to any one of claims 1 to 10, wherein
the other control apparatus is a Non-RT RIC.

12. The control apparatus according to any one of claims 1 to 11, wherein
the control apparatus is a Near-RT RIC.

13. A non-transitory computer readable storage medium storing a program which, when executed by one or more processors of an apparatus, causes the apparatus to function as the control apparatus according to any one of claims 1 to 12.
